# EUROPEAN PATENT APPLICATION

(11) **EP 4 779 813 A1**
(43) Date of publication of application: **22.07.2026**
(21) Application number: 26151924.3
(22) Date of filing: 14.01.2026
(51) Int. Cl.: H01R 13/50, B33Y 80/00, H01R 13/627, H01R 43/18

(54) **3D PRINTED LATCHING FEATURES ENABLING HOUSING RETENTION**

(30) Priority: 17.01.2025 US 202519026771
(71) Applicant: TE Connectivity Solutions GmbH, 8200 Schaffhausen (CH)
(72) Inventor: BADARINATH, Rakshith, Middletown, PA 17057 (US); HEMOND, Jessica H.B., Middletown, PA 17057 (US); BYLER, William B., Middletown, PA 17057 (US); LANDON, III, Raymond Leroy, Middletown, PA 17057 (US); WORKMAN, Emma L., Middletown, PA 17057 (US); YANG, Yanzhe, Middletown, PA 17057 (US)
(74) Representative: Ashton, Gareth Mark

(57) **Abstract**

An electrical connector (200) includes a housing (220) having a housing body (230) being a layered structure with walls (232) forming a contact channel (222). The housing includes a connector latch (252) extending from a first wall (234) of the walls having a fulcrum (290) extending from the first wall. The connector latch includes a latch actuator (280) extending from the fulcrum configured to be actuated to move the connector latch. The connector latch includes a latch arm (260) extending from the actuator and a latch hook (262) extending from the latch arm configured to be coupled to a latching element (250) of a mating electrical connector (300). The connector latch includes slots (270) between the latch arm and the fulcrum allowing movement of the latch arm relative to the fulcrum. The electrical connector includes a contact (210) received in the contact channel configured to be mated with a mating contact of the mating electrical connector.

## Description

### BACKGROUND OF THE INVENTION

The subject matter herein relates generally to electrical connectors and similar devices which are additively manufactured.

Electrical connectors are used to electrically connect components to transmit data and/or power between the components. The electrical connectors may include a plug and a receptacle connector mated at a mating interface. Typically, a latch is used to secure the electrical connectors together. Options outside the use of housing latches include mechanical fastening which adds cost and complexity to the connector assembly. Latches have been designed to perform based on the material and process in use, respectively polyamide (PA) and molding. The latch is designed to have an audible click when mated to provide feedback to the installer. The latch provides good retention force as well as durability, such as to accommodate numerous mating cycles. The latches are designed to meet durability and retention forces based on the polymer material selected for molding.

Conventional connector housings are not without disadvantages. For example, changes in housing designs are difficult and expensive due to the need for customized tooling for molding of the new parts. There is a need for faster design turnaround and faster product realization. Additive manufacturing technology including Vat Polymerization (VP), including but not limited to Digital Light Processing (DLP) or stereolithography (SLA), technology offers a solution to conventional molding providing reduced cost and customized designs with a faster turn around time. However, the materials used, commonly photopolymers such as but not limited to polyacrylates (PAK) do not have the same mechanical functionality that PA or other common thermoplastic resins do. There is a need for novel latching mechanisms designed for the different materials and manufacturing technique.

### BRIEF DESCRIPTION OF THE INVENTION

In one embodiment, an electrical connector is provided which includes a housing that includes a housing body. The housing body has a layered structure. The housing includes walls forming a contact channel. The housing includes a connector latch extending from a first wall of the walls. The connector latch includes a fulcrum extending from the first wall. The connector latch includes a latch actuator extending from the fulcrum configured to be actuated to move the connector latch. The connector latch includes a latch arm extending from the actuator and a latch hook extending from the latch arm configured to be coupled to a corresponding latching feature of the mating electrical connector. The connector latch includes slots between the latch arm and the fulcrum allowing movement of the latch arm relative to the fulcrum. The electrical connector includes a contact received in the contact channel configured to be mated with a mating contact of the mating electrical connector.

In another embodiment, an electrical connector is provided and includes a housing that includes a housing body. The housing body has a layered structure. The housing includes walls forming a contact channel. The housing includes a connector latch extending from a first wall of the walls. The connector latch includes a fulcrum extending from the first wall. The connector latch includes a latch actuator extending from the fulcrum configured to be actuated to move the connector latch. The connector latch includes a latch arm extending from the actuator. The latch arm includes a forward portion forward of the fulcrum with a latch hook extending from the latch arm toward the first wall. The latch hook configured to be coupled to a latching element of a mating electrical connector. The forward portion has an outer surface parallel to the first wall. The electrical connector includes a contact received in the contact channel configured to be mated with a mating contact of the mating electrical connector.

In a further embodiment, an electrical connector is provided and includes a housing that includes a housing body. The housing body has a layered structure. The housing includes walls forming a contact channel. The housing includes a connector latch extending from a first wall of the walls. The connector latch includes a fulcrum extending from the first wall. The connector latch includes a latch actuator extending from the fulcrum configured to be actuated to move the connector latch. The connector latch includes a latch arm extending from the actuator and a latch hook extending from the latch arm configured to be coupled to a latching element of a mating electrical connector. The housing includes a positive stop extending from the first wall. The positive stop aligned with the latch actuator to limit movement of the latch actuator in a direction toward the first wall. The electrical connector includes a contact received in the contact channel configured to be mated with a mating contact of the mating electrical connector.

### BRIEF DESCRIPTION OF THE DRAWINGS

Figure 1 illustrates an electrical connector system in accordance with an exemplary embodiment.
Figure 2 is an exploded view of the electrical connector system in accordance with an exemplary embodiment.
Figure 3 is a front perspective view of a portion of the electrical connector in accordance with an exemplary embodiment showing the housing.
Figure 4 illustrates the first electrical connector coupled to the second electrical connector in accordance with an exemplary embodiment showing the housing of the second electrical connector in section to illustrate the latching interface between the latching elements.
Figure 5 is a front perspective view of a portion of the electrical connector showing the connector latch in accordance with an exemplary embodiment.
Figure 6 is a side view of a portion of the electrical connector showing the connector latch in accordance with an exemplary embodiment.
Figure 7 is a front perspective view of a portion of the electrical connector showing the connector latch in accordance with an exemplary embodiment.
Figure 8 is a side view of a portion of the electrical connector showing the connector latch in accordance with an exemplary embodiment.
Figure 9 is a front perspective view of a portion of the electrical connector showing the connector latch in accordance with an exemplary embodiment.
Figure 10 is a side view of a portion of the electrical connector showing the connector latch in accordance with an exemplary embodiment.
Figure 11 is a front perspective view of a portion of the electrical connector showing the connector latch in accordance with an exemplary embodiment.
Figure 12 is a side view of a portion of the electrical connector showing the connector latch in accordance with an exemplary embodiment.
Figure 13 is a front view of a portion of the electrical connector showing the connector latch in accordance with an exemplary embodiment.
Figure 14 is a side view of a portion of the electrical connector showing the connector latch in accordance with an exemplary embodiment.
Figure 15 is a front perspective view of a portion of the electrical connector showing the latch hook of the connector latch in accordance with an exemplary embodiment.

### DETAILED DESCRIPTION OF THE INVENTION

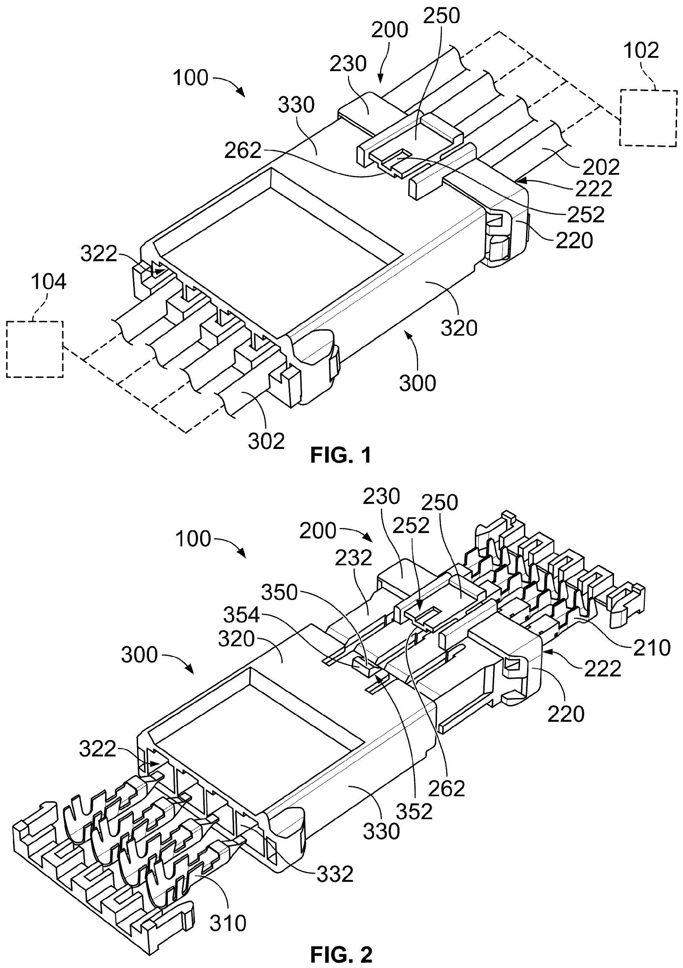

Figure 1 illustrates an electrical connector system 100 in accordance with an exemplary embodiment. Figure 2 is an exploded view of the electrical connector system 100 in accordance with an exemplary embodiment. The electrical connector system 100 includes a first electrical connector 200 electrically connected to a first component 102 and a second electrical connector 300 electrically connected to a second component 104. The electrical connectors 200, 300 are mated at a separable mating interface. The electrical connectors 200, 300 transmit data and/or power between the first and second components 102, 104.

In an exemplary embodiment, the first electrical connector 200 is a cable connector having one or more cables 202 extending from the first electrical connector 200. In alternative embodiments, the first electrical connector 200 may be a board connector terminated to a circuit board (not shown). In alternative embodiments, in lieu of the second electrical connector 300, the first electrical connector 200 may be directly mated to a circuit board. For example, the first electrical connector 200 may be a card edge connector configured to receive an edge of a circuit board.

The first electrical connector 200 includes a housing 220 holding one or more contacts 210. For example, the contacts 210 are configured to be received in contact channels 222 of the housing 220. The contacts 210 and contact channels 222 may be arranged in one or more rows and one or more columns. The contacts 210 may be held in the contact channels 222 by contact latches (not shown). Each contact 210 is terminated to an end of the corresponding cable 202. The contact 210 may be crimped to the end of the corresponding cable 202. Alternatively, the contact 210 may be welded or soldered to the end of the cable 202. In other alternative embodiments, the contact 210 may be configured to be terminated to a circuit board, such as being press-fit or soldered to a board contact of the circuit board.

In an exemplary embodiment, the housing 220 includes a housing body 230. The housing body 230 provides both mechanical and electrical functionality. The housing body 230 includes walls 232 defining the contact channels 222. In an exemplary embodiment, the housing body 230 is a unitary, monolithic structure. For example, the housing body 230 is integrally formed as a single piece from a manufacturing process. In an exemplary embodiment, the housing body 230 is formed from an additive manufacturing process. For example, the housing body 230 is manufactured from a 3D printing process. Additive manufacturing processes enable design freedom as well as faster production cycle, such as compared to conventional molding processes. Vat Polymerization (VP) technology such as Digital Light Processing (DLP) or Stereolithography (SLA) is a common choice to produce high performing, high resolution parts. The housing body 230 is manufactured from a dielectric material, such as a polyacrylate (PAK) material. The housing body 230 may be manufactured from a photopolymer material. In various embodiments, the hosing body 230 is manufactured from a thermoset polymer material. In other various embodiments, the housing body 230 is manufactured from a thermoplastic polymer material. In an exemplary embodiment, the housing body 230 is additive manufactured resulting in a layered structure. For example, the housing body 230 includes layers formed during an additive manufacturing process, such as 3D printing, to form the various layers to form the unitary, monolithic structure. The housing body 230 may manufactured using 3D printing resulting in a layered structure with layers varying based on technology. The layered structure may have layers having a nominal thickness of approximately the 20-50µm range.

In an exemplary embodiment, the first electrical connector 200 includes a latching element 250 configured to be coupled to the first electrical connector 200 to secure the first and second electrical connectors 200, 300. The latching element 250 is manufactured with the housing body 230. For example, the latching element 250 is additive manufactured, such as 3D printed, with the walls 232 of the housing body 230. The housing body 230 and the latching element 250 may be integrally formed in one piece, and so may be a unitary, monolithic structure. In the illustrated embodiment, the latching element 250 includes a housing latching mechanism, such as a deflectable connector latch 252 having a latch hook 262.

In an exemplary embodiment, the second electrical connector 300 is a cable connector having one or more cables 302 extending from the second electrical connector 300. In alternative embodiments, the second electrical connector 300 may be a board connector terminated to a circuit board.

The second electrical connector 300 includes a housing 320 holding one or more contacts 310. For example, the contacts 310 are configured to be received in contact channels 322 of the housing 320. The contact channels 322 may be of varying complexity, size and/or shape. The contacts 310 and contact channels 322 may be arranged in one or more rows and one or more columns. The contacts 310 may be held in the contact channels 322 by contact latches (not shown). Each contact 310 is terminated to an end of the corresponding cable 302. The contact 310 may be crimped to the end of the corresponding cable 302. Alternatively, the contact 310 may be welded or soldered to the end of the cable 302. In other alternative embodiments, the contact 310 may be configured to be terminated to a circuit board, such as being press-fit or soldered to a board contact of the circuit board.

In an exemplary embodiment, the housing 320 includes a housing body 330. The housing body 330 includes walls 332 defining the contact channels 322. In an exemplary embodiment, the housing body 330 is a unitary, monolithic structure. For example, the housing body 330 is formed as a single piece from a manufacturing process. In an exemplary embodiment, the housing body 330 is formed from an additive manufacturing process. For example, the housing body 330 is manufactured by a 3D printing process. The housing body 330 is manufactured from a dielectric material, such as a polyacrylate (PAK) material. The housing body 330 may be manufactured from a photopolymer material. In various embodiments, the hosing body 330 is manufactured from a thermoset polymer material. In other various embodiments, the housing body 330 is manufactured from a thermoplastic polymer material. In an exemplary embodiment, the housing body 330 is a layered structure. For example, the housing body 330 includes layers formed during an additive manufacturing process, such as 3D printing, to form the various layers to form the unitary, monolithic structure.

In an exemplary embodiment, the second electrical connector 300 includes a retention feature 350 complimentary to the connector latch 252. The retention feature 350 may include a latching element, a catch, a window, a shallow depression, or similar static feature in the housing 320. The retention feature 350 is configured to be coupled to the first electrical connector 200 to secure the first and second electrical connectors 200, 300. The latching element 350 is manufactured with the housing body 330. For example, the latching element 350 is additive manufactured, such as 3D printed, with the walls 332 of the housing body 330. The housing body 230 and the retention feature 350 may be integrally formed in one piece, and so may be a unitary, monolithic structure. In the illustrated embodiment, the latching element 350 includes a fixed latch 352 having a catch surface 354.

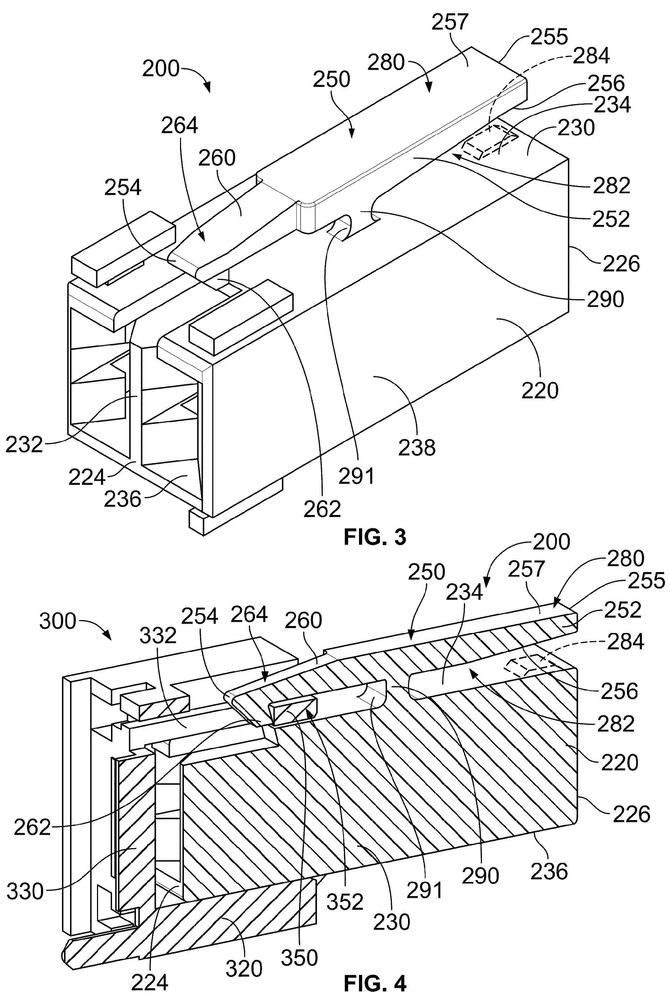

Figure 3 is a front perspective view of a portion of the electrical connector 200 in accordance with an exemplary embodiment showing the housing 220. Figure 4 illustrates the first electrical connector 200 coupled to the second electrical connector 300 in accordance with an exemplary embodiment showing the housing 320 of the second electrical connector 300 in section to illustrate the latching interface between the latching elements 250, 350. The latch hook 262 of the connector latch 252 is configured to be coupled to the fixed latch 352 to secure the first electrical connector 200 to the second electrical connector 300. The latching elements 250, 350 are manufactured with the corresponding housing bodies 230, 330. For example, the latching elements 250, 350 are additive manufactured, such as 3D printed, with the walls 232, 332, respectively, of the housing bodies 230, 330.

The housing 220 extends between a front 224 and a rear 226. In an exemplary embodiment, the front 224 defines a mating end of the electrical connector 200 configured to be mated with the mating electrical connector 300. In the illustrated embodiment, the rear 226 defines a cable end of the electrical connector 200, wherein the cables are configured to extend from the housing 220 of the cable end. In an alternative embodiment, the electrical connector 200 may be a right angle connector having the cable end oriented perpendicular to the mating end, such as at the top or the bottom. The walls 232 of the housing body 230 extend between the front 224 in the rear 226. In an exemplary embodiment, the walls 232 include a first wall 234 and a second wall 236 opposite the first wall 234. The first wall 234 may be a top wall and the second wall 236 may be a bottom wall. The walls 232 include side walls 238 between the first and second walls 234, 236.

In an exemplary embodiment, the connector latch 252 extends from the first wall 234 (for example, the top wall). The connector latch 252 may additionally or alternatively extend from a different wall. For example, multiple latches may be provided at opposite sides of the housing 220. The connector latch 252 is located at an exterior of the housing 220 to interface with the fixed latch 352. In an exemplary embodiment, the connector latch 252 is deflectable. For example, the latching end of the connector latch 252 may be deflected outward (for example, upward) away from the first wall 234 to an actuated or unlatched position. The connector latch 252 may be deflected by pressing downward on the opposite end of the connector latch 252 to actuate or unlatch the connector latch 252. The connector latch 252 may return to the normal or latched position when released to coupled to the fixed latch 352.

The connector latch 252 extends between a front 254 and a rear 255. The connector latch 252 includes an inner side 256 facing the housing 220 and an outer side 257 facing away from the housing 220. In the illustrated embodiment, the inner side 256 is a bottom of the connector latch 252 and the outer side 257 is a top of the connector latch 252. However, other orientations are possible in alternative embodiments.

The connector latch 252 includes a latch arm 260, an actuator 280 extending from the latch arm 260, and a fulcrum 290 between the latch arm 260/actuator 280 and the housing 220. The latch arm 260 is located at the front 254 and the actuator 280 is located at the rear 255. The connector latch 252 is a unitary, monolithic structure. For example, the latch arm 260, the actuator 280 and the fulcrum 290 of the connector latch 252 are formed as a single piece from a manufacturing process and may be formed integral with the housing 220 during the common manufacturing process. In an exemplary embodiment, the connector latch 252 is formed from an additive manufacturing process. For example, the connector latch 252 is manufactured by a 3D printing process. The connector latch 252 is manufactured from a dielectric material, such as a polyacrylate (PAK) material. The connector latch 252 may be manufactured from a photopolymer material. In various embodiments, the connector latch 252 is manufactured from a thermoset polymer material. In other various embodiments, the connector latch 252 is manufactured from a thermoplastic polymer material. In an exemplary embodiment, the connector latch 252 is a layered structure. For example, the connector latch 252 includes layers formed during an additive manufacturing process, such as 3D printing, to form the various layers to form the unitary, monolithic structure.

The latch arm 260 is configured to be coupled to the fixed latch 352. For example, the latch arm 260 includes a latch hook 262 configured to hook around and secure to the fixed latch 352 when the electrical connectors 200, 300 are fully mated. The latch hook 262 may include a pocket or groove that receives the fixed latch 352. The latch hook 262 forms a blocking surface that blocks or restricts unmating (for example, in a rearward direction) of the first electrical connector 200 from the second electrical connector 300. In an exemplary embodiment, the latch hook 262 is located at or proximate to a distal end 264 of the latch arm 260. The distal end 264 extends to a tip of the latch arm 260. The latch hook 262 may be located at other locations in alternative embodiments. In an exemplary embodiment, the latch hook 262 has a large surface area for supporting and latching to the fixed latch 352. For example, the distal end 264 of the latch arm 260 may be enlarged, such as being widened, to form a large latching area. The distal end 264 may be thickened relative to other portions of the latch arm 260 to provide a robust latching element to avoid cracking or breakage due to stress when pulling the electrical connectors 200, 300 apart.

The latch arm 260 extends forward of the actuator 280. For example, the latch arm 260 may transition and extend from the actuator 280. The actuator may extend rearward from the fulcrum 290. For example, the fulcrum 290 may transition rearwardly directly into the actuator 280. The actuator 280 is operably coupled to the latch arm 260. The actuator 280 extends rearward of the fulcrum 290. The actuator 280 is spaced apart from the housing 220 and allowed to deflect toward the housing 220 when actuated. For example, a pocket 282 is defined between the actuator 280 and the first wall 234. The pocket 282 provides a space for deflection of the actuator 280. The actuator 280 may be pressed downward toward the first wall 234 to actuate or raise the latch arm 260 to the actuator or unlatched position. In an exemplary embodiment, the actuator 280 is planar or flat. For example, the outer side 257 along the actuator 280 may be flat and may be parallel to the first wall 234. The inner side 256 along the actuator 280 may be flat and parallel to the first wall 234. The actuator 280 may have a uniform or constant thickness. Alternatively, the actuator 280 may have a variable thickness, such as being wedge shaped. For example, the actuator 280 may be thinner at the rear and thicker at the front, such as at the fulcrum 290. The actuator 280 may have other shapes in alternative embodiments.

In an exemplary embodiment, a positive stop 284 may be provided in the pocket 282 to limit deflection of the actuator 280. For example, the positive stop 284 may extend from the first wall 234 and/or the actuator 280 to reduce the amount of deflection and movement of the actuator 280 in the pocket 282.

In an exemplary embodiment, the connector latch 252 is connected to the housing 220 at the first wall 234 at the fulcrum 290. The connector latch 252 may include one or more of the fulcrums 290. The connector latch 252 is fixed to the first wall 234 at the fulcrum(s) 290. The latch arm 260 is deflectable relative to the first wall 234 at the fulcrum 290. For example, the latch arm 260 may pivot or rotate at the fulcrum 290. The fulcrum 290 extends from the first wall 234 to the latch arm 260 and/or the actuator 280. For example, the fulcrum 290 may extend vertically between the first wall 234 and the latch arm 260 and/or the actuator 280.

In an exemplary embodiment, the fulcrum 290 transitions to the first wall 234 at fillets 291. The fillets 291 define a rounded or smooth transition between the surfaces. The fillets 291 reinforce the corner where the surfaces meet. The fillets 291 may be concave junctions. The fulcrum 290 may transition to the latch arm 260 and/or the actuator 280 at fillets. The height of the fulcrum 290 defines the spacing between the latch arm 260 and/or the actuator 280 and the first wall 234. For example, the height of the fulcrum 290 may define the height of the pocket 282.

In an exemplary embodiment, the fulcrum 290 and/or the latch arm 260 may include flexing enhancements, such as grooves or cuts or slots or thinned areas (not shown) formed therein, in the area of deflection or bending, to allow ease of deflection of the connector latch 252 relative to the first wall 234. The flexing enhancements may reduce stresses at the area of deflection or bending to reduce the risk of breaking or cracking at the transitions between the fulcrum 290 and the first wall 234 and/or at the transitions between the fulcrum 290 and the latch arm 260 and/or at the transitions between the fulcrum 290 and the actuator 280. The fulcrum 290 constitutes a spring element allowing rotation of the latch arm 260 relative to the first wall 234 and fulcrum.

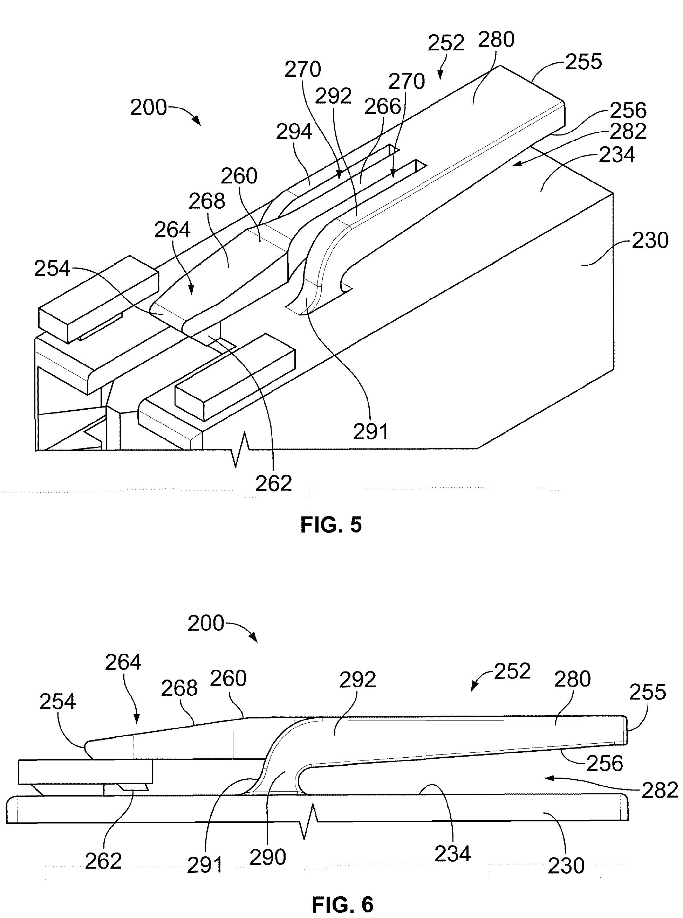

Figure 5 is a front perspective view of a portion of the electrical connector 200 showing the connector latch 252 in accordance with an exemplary embodiment. Figure 6 is a side view of a portion of the electrical connector 200 showing the connector latch 252 in accordance with an exemplary embodiment. The connector latch 252 is manufactured with the housing body 230. For example, the connector latch 252 is additive manufactured, such as 3D printed, with the first wall 234 of the housing body 230. In an exemplary embodiment, the connector latch 252 is a layered structure. For example, the connector latch 252 includes layers formed during an additive manufacturing process to form the various layers to form the unitary, monolithic structure with the housing body 230.

The connector latch 252 is connected to the first wall 234 at the fulcrum 290 and includes the fillets 291 to transition between the fulcrum 290 and the first wall 234. The fulcrum 290 may be curved, such as curving rearwardly. The connector latch 252 includes the actuator 280 at the rear 255. The pocket 282 is defined between the inner side 256 of the actuator 280 and the first wall 234. The connector latch 252 includes the latch arm 260 at the front 254. The latch hook 262 is located at the distal end 264 of the latch arm 260.

In an exemplary embodiment, the connector latch 252 includes slots 270. The slots 270 increase the flexibility of the connector latch 252. For example, the slots 270 decouple the latch arm 260 from the fulcrum 290 allowing movement of the latch arm 260 relative to the fulcrum 290. The slots 270 decrease the cross-sectional area (for example, width) of the supporting structures along the latch arm 260 and the fulcrum 290, which increases flexibility and reduces internal stresses along the supporting structures.

In an exemplary embodiment, the fulcrum 290 is split and includes a first beam 292 and a second beam 294. The first and second beams 292, 294 are both connected to the first wall 234. For example, the first and second beams 292, 294 are spaced apart from each other and define feet for supporting the connector latch 252. The latch actuator 280 is connected to the ends of the first and second beams 292, 294. The latch actuator 280 extends rearward from the ends of the first and second beams 292, 294. The latch actuator 280 is configured to be pressed downward to flex the first and second beams 292, 294 and rotate the fulcrum 290. The latch arm 260 is located between the first and second beams 292, 294. The latch arm 260 is separated from the first and second beams 292, 294 by the slots 270. The slots 270 extend to the end of the fulcrum 290, such as at the ends of the first and second beams 292, 294.

The latch arm 260 extends forward from the actuator 280. In the illustrated embodiment, the latch arm 260 includes a beam 266 extending from the actuator 280. The beam 266 is located between the first and second beams 292, 294. The beam 266 is separated from the first and second beams 292, 294 by the slots 270. The beam 266 extends forward of the fulcrum 290. For example, the latch arm 260 includes a forward portion 268 extending from the beam 266 to the distal end 264. The latch hook 262 extends from the inner side 256 of the forward portion 268. In an exemplary embodiment, the beam 266 is narrower than the forward portion 268. For example, the latch arm 260 is necked downward/inward at the beam 266. The beam 266 may be flexed or bent relative to the actuator 280. For example, the beam 266 of the latch arm 260 is movable relative to the first and second beams 292, 294 of the fulcrum 290 to allow movement of latch hook 262 relative to the fulcrum 290 and thus the first wall 234. The increased flexibility reduces internal stresses along the latch arm 260 and/or the fulcrum 290 reducing the risk of cracking or breakage.

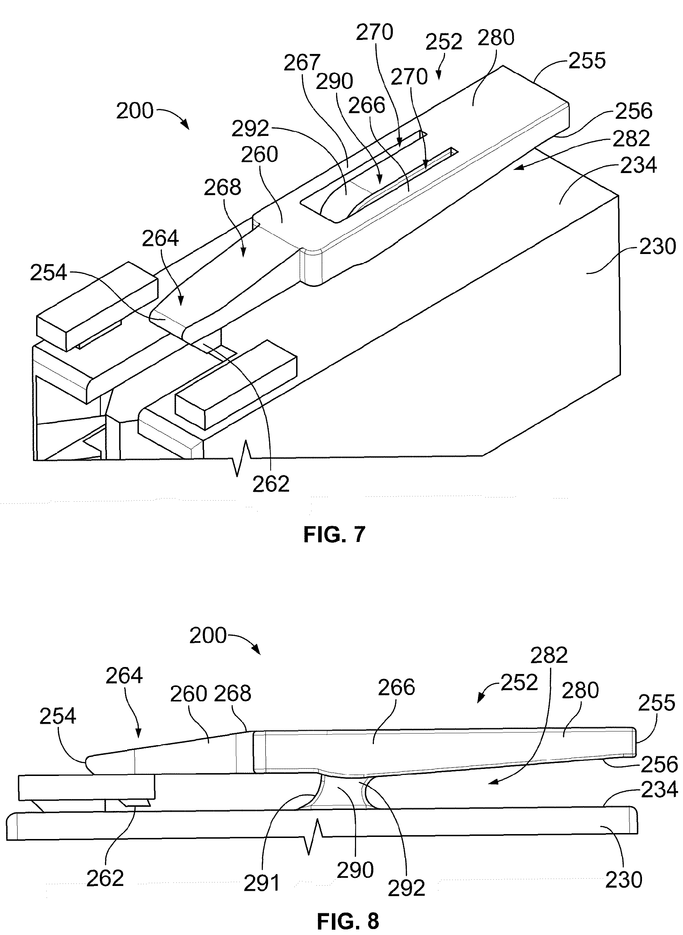

Figure 7 is a front perspective view of a portion of the electrical connector 200 showing the connector latch 252 in accordance with an exemplary embodiment. Figure 8 is a side view of a portion of the electrical connector 200 showing the connector latch 252 in accordance with an exemplary embodiment. The connector latch 252 is manufactured with the housing body 230. For example, the connector latch 252 is additive manufactured, such as 3D printed, with the first wall 234 of the housing body 230. In an exemplary embodiment, the connector latch 252 is a layered structure. For example, the connector latch 252 includes layers formed during an additive manufacturing process to form the various layers to form the unitary, monolithic structure with the housing body 230.

The connector latch 252 is connected to the first wall 234 at the fulcrum 290 and includes the fillets 291 to transition between the fulcrum 290 and the first wall 234. The fulcrum 290 may be curved, such as curving rearwardly. The connector latch 252 includes the actuator 280 at the rear 255. The pocket 282 is defined between the inner side 256 of the actuator 280 and the first wall 234. The connector latch 252 includes the latch arm 260 at the front 254. The latch hook 262 is located at the distal end 264 of the latch arm 260.

In an exemplary embodiment, the connector latch 252 includes the slots 270. The slots 270 increase the flexibility of the connector latch 252. For example, the slots 270 decouple the latch arm 260 from the fulcrum 290 allowing movement of the latch arm 260 relative to the fulcrum 290. The slots 270 decrease the cross sectional area (for example, width) of the supporting structures along the latch arm 260 and the fulcrum 290, which increases flexibility and reduces internal stresses along the supporting structures.

In an exemplary embodiment, the connector latch 252 includes a single fulcrum 290. For example, the fulcrum 290 includes the single beam 292 rather than multiple beams. The beam 292 is connected to the first wall 234 and defines a foot to support the connector latch 252. The latch actuator 280 is connected to the end of the beam 292 and extends rearward from the end of the beam 292. The latch actuator 280 is configured to be pressed downward to flex the beam 292 and rotate the fulcrum 290. In an exemplary embodiment, the beam 292 is embedded in the latch arm 260. For example, the latch arm 260 is split around the beam 292. The latch arm 260 is separated from the beam 292 by the slots 270. The slots 270 extend to the end of the fulcrum 290, such as at the end of the beam 292.

The latch arm 260 extends forward from the actuator 280. In the illustrated embodiment, the latch arm 260 includes the first beam 266 and a second beam 267 extending from the actuator 280. The first and second beams 266, 267 extend along opposite sides of the beam 292 of the fulcrum 290. For example, the beam 292 is located between the first and second beams 266, 267. The beam 292 is separated from the first and second beams 266, 267 by the slots 270. The first and second beams 266, 267 extend forward of the fulcrum 290. The forward portion 268 extends forward from the first and second beams 266, 267 to the distal end 264. The latch hook 262 extends from the inner side 256 of the forward portion 268. In an exemplary embodiment, the first and second beams 266, 267 are narrower than the forward portion 268. The first and second beams 266, 267 are flexible and configured to be bent or flexed relative to the actuator 280. For example, the first and second beams 266, 267 of the latch arm 260 are movable relative to the beam 292 of the fulcrum 290 to allow movement of latch hook 262 relative to the fulcrum 290 and thus the first wall 234. The increased flexibility of the first and second beams 266, 267 reduces internal stresses along the latch arm 260 and/or the fulcrum 290 reducing the risk of cracking or breakage.

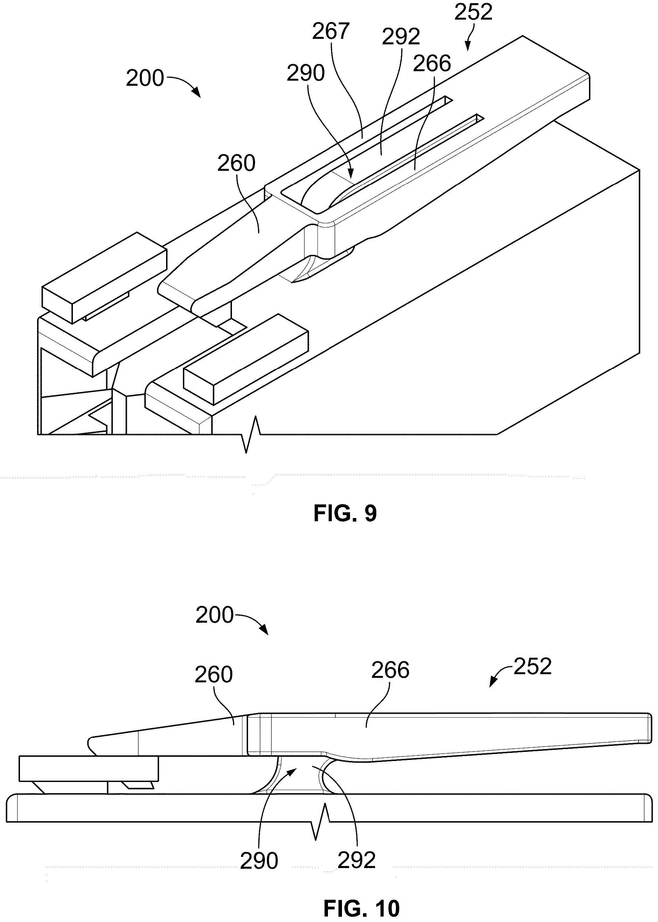

Figure 9 is a front perspective view of a portion of the electrical connector 200 showing the connector latch 252 in accordance with an exemplary embodiment. Figure 10 is a side view of a portion of the electrical connector 200 showing the connector latch 252 in accordance with an exemplary embodiment. The embodiment shown in Figures 9 and 10 is similar to the embodiment shown in Figures 7 and 8; however, the fulcrum 290 is shifted forward in the embodiment shown in Figures 9 and 10 making a longer beam 292 for the fulcrum 290 and longer beams 266, 267 for the latch arm 260, which increases flexibility and reduces internal stresses along the supporting structures.

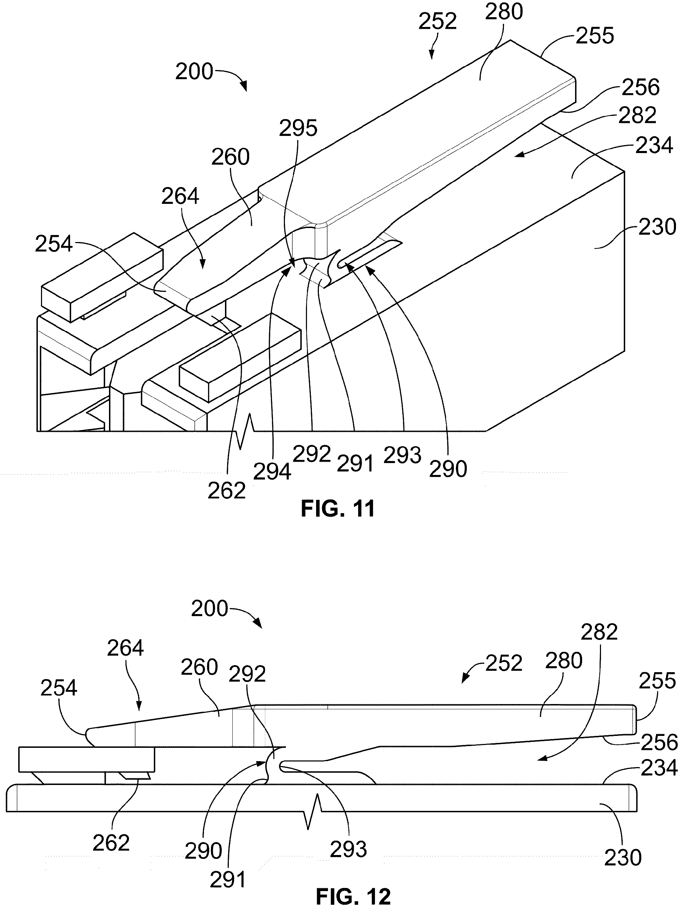

Figure 11 is a front perspective view of a portion of the electrical connector 200 showing the connector latch 252 in accordance with an exemplary embodiment. Figure 12 is a side view of a portion of the electrical connector 200 showing the connector latch 252 in accordance with an exemplary embodiment. The connector latch 252 is manufactured with the housing body 230. For example, the connector latch 252 is additive manufactured, such as 3D printed, with the first wall 234 of the housing body 230. In an exemplary embodiment, the connector latch 252 is a layered structure. For example, the connector latch 252 includes layers formed during an additive manufacturing process to form the various layers to form the unitary, monolithic structure with the housing body 230.

The connector latch 252 is connected to the first wall 234 at the fulcrum 290 and includes the fillets 291 to transition between the fulcrum 290 and the first wall 234. The fulcrum 290 may be curved, such as curving rearwardly. In an exemplary embodiment, the fulcrum 290 is a split fulcrum including the first and second beams 292, 294 at opposite sides of the fulcrum 290. In an exemplary embodiment, the fulcrum 290 includes spring beams 293, 295 forming the first and second beams 292, 294. The spring beams 293, 295 are deflectable. The spring beams 293, 295 may be C-shaped, such as having an upper portion, a lower portion, and a curved connecting portion between the upper and lower portions. The spring beams 293, 295 may have other shapes in alternative embodiments. The spring beams 293, 295 are thin, such as being thinner than the beams shown in Figures 5-8. In the illustrated embodiment, the spring beams 293, 295 are located at the front end of the fulcrum. Other locations are possible in alternative embodiments.

The connector latch 252 includes the latch actuator 280 at the rear 255. The actuator 280 is located rearward of the fulcrum 290. The pocket 282 is defined between the inner side 256 of the actuator 280 and the first wall 234. The connector latch 252 includes the latch arm 260 at the front 254. The latch arm 260 is located forward of the fulcrum 290. The latch hook 262 is located at the distal end 264 of the latch arm 260. In the illustrated embodiment, the latch arm 260 is solid and does not include any slots. However, in alternative embodiments, the latch arm 260 may include slots to increase the flexibility of the connector latch 252.

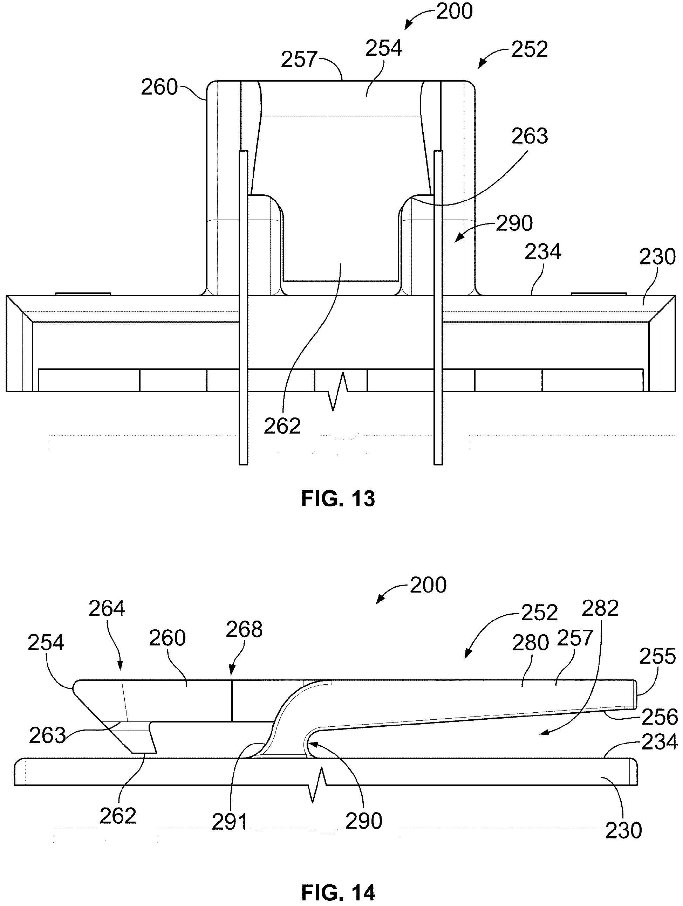

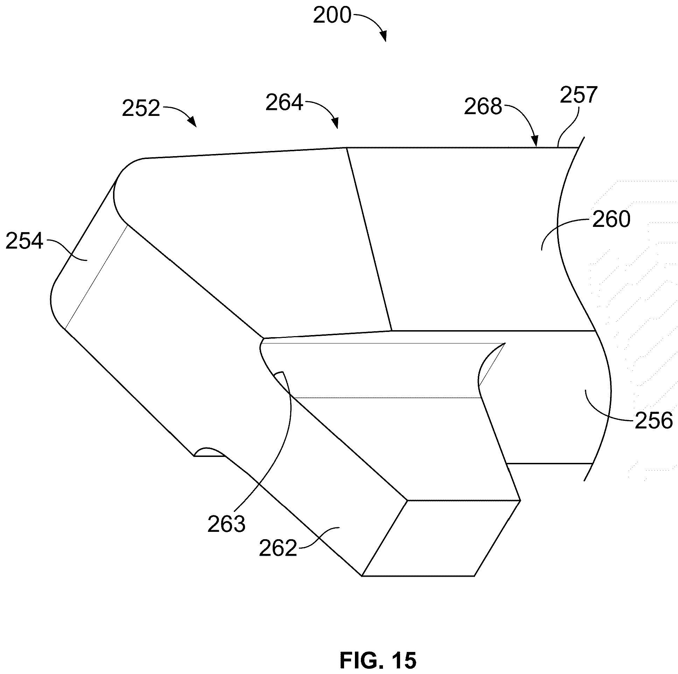

Figure 13 is a front view of a portion of the electrical connector 200 showing the connector latch 252 in accordance with an exemplary embodiment. Figure 14 is a side view of a portion of the electrical connector 200 showing the connector latch 252 in accordance with an exemplary embodiment. Figure 15 is a front perspective view of a portion of the electrical connector 200 showing the latch hook 262 of the connector latch 252 in accordance with an exemplary embodiment.

The connector latch 252 is manufactured with the housing body 230. For example, the connector latch 252 is additive manufactured, such as 3D printed, with the first wall 234 of the housing body 230. In an exemplary embodiment, the connector latch 252 is a layered structure. For example, the connector latch 252 includes layers formed during an additive manufacturing process to form the various layers to form the unitary, monolithic structure with the housing body 230.

The connector latch 252 is connected to the first wall 234 at the fulcrum 290 and includes the fillets 291 to transition between the fulcrum 290 and the first wall 234. The fulcrum 290 may be curved, such as curving rearwardly. The connector latch 252 includes the actuator 280 at the rear 255. The fulcrum 290 may include a single foot or multiple feet. The fulcrum 290 may include a single beam or multiple beams connected to the latch arm 260 and/or the latch actuator 280. In an exemplary embodiment, the fulcrum 290 has a fulcrum width approximately equal to a width of the latch arm 260.

The connector latch 252 includes the latch actuator 280 at the rear 255. The actuator 280 is located rearward of the fulcrum 290. The pocket 282 is defined between the inner side 256 of the actuator 280 and the first wall 234. The connector latch 252 includes the latch arm 260 at the front 254. The latch hook 262 is located at the distal end 264 of the latch arm 260.

In an exemplary embodiment, the latch arm 260 is strengthened to reduce cracking or breakage of the latch arm 260. For example, the surface area of the latch arm 260 may be increased or enlarged to strengthen the latch arm 260. In an exemplary embodiment, a thickness and/or a width of the latch arm 260 may be enlarged. For example, the forward portion 268 of the latch arm 260 may be strengthened to reduce cracking or breakage at the latch hook 262. In an exemplary embodiment, the outer surface 257 of the latch arm 260 is coplanar with the outer surface 257 of the latch actuator 280. For example, the outer surface 257 of the latch arm 260 does not taper downward as the embodiments shown in Figures 5-11. Keeping the outer surface 257 of the latch arm 260 generally coplanar with the latch actuator 280 (by eliminating the downward taper) increases the thickness of the forward portion 268 of the latch arm 260. Eliminating the downward taper of the latch arm 260 allows for a uniform number of layers of the additive manufactured material along the latch arm 260. Eliminating the downward taper of the latch arm 260 eliminates shear planes along the layers of the printed material. In an exemplary embodiment, the outer surface 257 of the latch arm 260 is parallel to the first wall 234.

The latch hook 262 extends from the bottom side of the latch arm 260. The latch hook 262 includes an angled lead ramp at the front configured to interface with the latching element 350. The latch hook 262 includes a rear facing catch surface configured to interface with the latching element 350. The catch surface may be angled, such as including an undercut, to secure the latch hook 262 to the latching element 350. The fillets 263 may be concave junctions. In an exemplary embodiment, the latch hook 262 has a large surface area for interfacing with the latching element 350. For example, the latch hook 262 may have a wide seat at the catch surface to interface with the latching element 350. The latch hook 262 may have a latch hook width approximately equal to a width of the latch arm 260. The latch hook width may be wider than the fulcrum width of the fulcrum 290. In an exemplary embodiment, the latch hook 262 includes fillets 263 along the sides of the latch hook 262. The fillets 263 define a rounded or smooth transition between the surfaces. The fillets 263 reinforce the corner where the surfaces meet.

## Claims

1. An electrical connector (200) comprising:
a housing (220) including a housing body (230), the housing body (230) having a layered structure, the housing including walls (232) forming a contact channel (222), the housing (220) including a connector latch (250) extending from a first wall (234) of the walls, the connector latch (252) including a fulcrum (290) extending from the first wall (234), the connector latch (252) including a latch actuator (280) extending from the fulcrum (290) configured to be actuated to move the connector latch (252), the connector latch including a latch arm (260) extending from the actuator (280) and a latch hook (262) extending from the latch arm (260) configured to be coupled to a latching element (350) of a mating electrical connector (300); and
a contact (210) received in the contact channel (222) configured to be mated with a mating contact (310) of the mating electrical connector (300).

2. The electrical connector of claim 1, the connector latch (252) including slots (270) between the latch arm (260) and the fulcrum (290) allowing movement of the latch arm (260) relative to the fulcrum (290).

3. The electrical connector of claim 2, wherein the fulcrum (290) includes a first beam (292) and a second beam (294), the latch arm (260) located between the first and second beams (292, 294) and separated from the first and second beams by the slots (270).

4. The electrical connector of claim 2, wherein the latch arm (260) includes a first beam (266) and a second beam (267), the fulcrum (290) located between the first and second beams and separated from the first and second beams by the slots (270).

5. The electrical connector of any preceding claim, wherein the housing (220) includes a positive stop (284) extending from the first wall (234), the positive stop aligned with the latch actuator (280) to limit movement of the latch actuator in a direction toward the first wall (234).

6. The electrical connector of any preceding claim, wherein an outer surface (257) of the latch arm (260) is coplanar with an outer surface (257) of the latch actuator (280).

7. The electrical connector of any preceding claim, wherein the latch arm (260) includes an outer surface (257) parallel to the first wall (234).

8. The electrical connector of any preceding claim, wherein the fulcrum (290) has a fulcrum width, the latch hook (262) having a latch hook width wider than the fulcrum width.

9. The electrical connector of any preceding claim, wherein the fulcrum (290) has a fulcrum width approximately equal to a width of the latch arm (260).

10. The electrical connector of any preceding claim, wherein the fulcrum (290) includes fillets (291) at the first wall (234).

11. The electrical connector of any preceding claim, wherein the fulcrum (290) includes a spring element allowing rotation of the connector latch (252) about the fulcrum.

12. The electrical connector of any preceding claim, wherein the latch arm extends from the latch actuator (280) to a distal end (264), the latch hook (262) located proximate to the distal end (264).

13. The electrical connector of any preceding claim, wherein the latch arm (260) includes a forward portion (268) forward of the fulcrum (290) with a latch hook (262) extending from the latch arm (260) toward the first wall (234), the forward portion (268) having an outer surface (257) parallel to the first wall.

14. The electrical connector of any preceding claim, wherein the connector latch (252) is located at an exterior of the housing (220).

15. The electrical connector of any preceding claim, wherein the latch hook (262) is deflectable outwardly away from the front wall (234) to an unlatched position by pressing the latch actuator (280) towards the first wall (234).
